# EUROPEAN PATENT APPLICATION

(11) **EP 1 912 214 A1**
(43) Date of publication of application: **16.04.2008**
(21) Application number: 07019835.3
(22) Date of filing: 10.10.2007
(51) Int. Cl.: G11B 7/135

(54) **Variable shape mirror and optical pickup device having the same**

(30) Priority: 10.10.2006 JP 2006276257
(71) Applicant: Funai Electric Co., Ltd., Daito-shi, Osaka 574-0031 (JP)
(72) Inventor: Chouji, Hideki, Daito-shi Osaka 574-0013 (JP); Maeda, Shigeo, Daito-shi Osaka 574-0013 (JP); Kotera, Hidetoshi, Kyoto-shi Kyoto 615-8510 (JP); Kanno, Isaku, Kyoto-shi Kyoto 615-8510 (JP)
(74) Representative: Beetz & Partner

(57) **Abstract**

A variable shape mirror (6) is composed of a substrate (7), a lower electrode film (8) which is disposed on the substrate (7), a piezoelectric film (9) which is disposed on the lower electrode film (8), an upper electrode film (10) which is disposed on the piezoelectric film (9), an insulating film (11) which is disposed on the upper electrode film (10), and a mirror film (12) which is disposed on the insulating film (11). The lower electrode film (8), the piezoelectric film (9), and the upper electrode film (10) function as a driving portion (13) to deform the mirror film (12). The upper electrode film (10) is divided into a plurality of divided electrodes (10a-10e) and the driving portion (13) includes a part which performs main deformation of the mirror film and a part which performs fine adjustment of deformation of the mirror film. Furthermore, an optical pickup device is disclosed which comprises the variable shape mirror.

## Description

### BACKGROUND OF THE INVENTION

### Field of the Invention

The present invention relates to a variable shape mirror that is provided to an optical pickup device and the like and able to deform a shape of the mirror surface, in particular, the present invention relates to a structure of variable shape mirror that is formed by laminated thin films. In addition, the present invention relates to an optical pickup device having a variable shape mirror structured as above described.

### Description of Related Art

When information of an optical disc such as a CD (compact disc), a DVD (digital versatile disc), or the like is read or written utilizing an optical pickup device, it is ideal that an optical axis of the optical pickup device is perpendicular to a disc surface. However, in practice, while the optical disc is rotated, they are not always perpendicular to each other. Because of this, when the information of the optical disc such as a CD, a DVD, or the like is read or written, if inclination of the disc surface with respect to the optical axis occurs, wave aberration (mainly, coma aberration) is generated. Further, When the optical disc to be reproduced by the optical pickup device is exchanged, if thickness of a transparent covering layer of the optical disc varies, the wave aberration (mainly, spherical aberration) is generated. Here, the transparent covering layer is a layer which is formed to protect a recording layer of the optical disc.

When such wave aberration is generated, because spot position of a laser beam which is irradiated on the optical disc is shifted from a correct position, if the wave aberration becomes larger than tolerance, a problem that correct recording or reproducing of information cannot be performed, is caused. By this reason, heretofore compensation of the wave aberration has been performed by utilizing a variable shape mirror, and various variable shape mirrors have been proposed.

For example, in JP-A-2005-032286 a variable shape mirror is proposed in that a lower electrode 102, a piezoelectric body 103, upper electrodes 104, 105, and an elastic body 106 are formed on a substrate 101 and a reflection film 108 is formed on a cavity portion 107 arranged on back side of the substrate 101, as shown in Fig. 5. Further, in JP-A-2005- 092987 a variable shape mirror is proposed which is the same as that in JP-A-2005-032286 except that the lower electrode is divided and the reflection mirror film is formed on the elastic body.

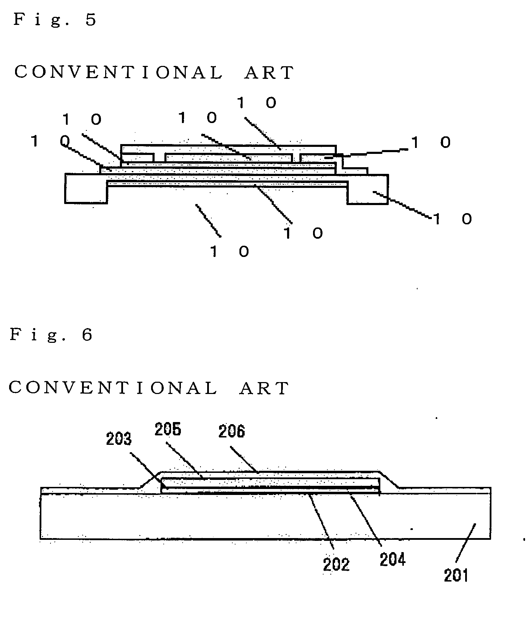

Further, in JP-A-2004-347753 a variable shape mirror is proposed which has a structure in that a second electrode film 202, a piezoelectric film 203, a first electrode film 204, an elastic plate film 205, and a reflection mirror film 206 are laminated on a silicon substrate 201 in this order as shown in Fig. 6.

However, because the variable shape mirror proposed in JP-A-2005-032286 or JP-A-2005-092987 has a structure in that the reflection mirror film is formed on a surface which is processed by etching after the etching is performed on the substrate, smoothness of the mirror is not enough. As a result, when the variable shape mirror which has a structure proposed in JP-A-2005-032286 or JP-A-2005-092987 is utilized in an optical pickup device, a problem is caused that compensation of the aberration cannot be performed precisely.

In addition, the variable shape mirror which is proposed in JP-A-2005-032286, JP-A-2005-092987, or JP-A-2004-347753 has a structure in that the piezoelectric film is formed in wide area of the substrate. When the piezoelectric film is formed in such wide area, because it is very difficult to form the characteristic of the piezoelectric film uniformly, there is high possibility that a part where its characteristic is not uniform is generated in a part of the piezoelectric film. If such a part where its characteristic is not uniform is formed in the piezoelectric film, there is a case that a desired shape of mirror is not obtained when the mirror is deformed by driving the piezoelectric film. In such a case a problem is caused that compensation of the aberration cannot be performed precisely even when the variable shape mirror is arranged in the optical pickup device.

### SUMMARY OF THE INVENTION

In view of the above described problems it is an object of the present invention to provide a variable shape mirror having a structure able to reduce an influence of a part having a nonuniform characteristic even when the part having a nonuniform characteristic is generated in the piezoelectric film. Further, it is another object of the present invention to provide a variable shape mirror which can obtain a flat mirror surface with attaining the above described object. In addition, other object of the present invention is to provide an optical pickup device which can perform precisely compensation of aberration by including the variable shape mirror which can deform the mirror in a desired shape.

To attain the above described first object a variable shape mirror in accordance with one aspect of the present invention includes: a driving portion which includes a piezoelectric film and a first electrode film and a second electrode film which sandwich the piezoelectric film; a substrate for supporting the driving portion in contact with the first electrode film; and a mirror film which is deformed preferably by driving of the driving portion, and the variable shape mirror is characterized by a structure in which preferably at least one of the first electrode film and the second electrode film is preferably divided into a plurality of divided electrodes, and the driving portion preferably includes a part which preferably performs main deformation of the mirror film and a part which preferably performs fine adjustment of deformation of the mirror film.

According to the present invention in the variable shape mirror, function of the driving portion which is included in the variable shape mirror is divided into a part which performs main deformation of the mirror film and a part which preferably performs fine adjustment of deformation of the mirror film by making preferably at least one of the first electrode film and the second electrode film divided electrodes. Because of this arrangement it becomes possible that the desired shape of the mirror is obtained by adjustment of voltage which is applied to each of the divided electrodes if a part where piezoelectric characteristic is not uniform exists in the piezoelectric film which is sandwiched between the first electrode film and the second electrode film.

Further in the present invention it is preferable that the divided electrodes are composed of a first divided electrode and at least one second divided electrodes which are preferably disposed around the first divided electrode in the variable shape mirror having the above described structure.

By this arrangement, it is easy to obtain the desired shape of the mirror by that a part which includes the first divided electrode in the driving portion is made to be a part performing main deformation of the mirror film and a part which includes the second divided electrodes in the driving portion is made to be a part performing fine adjustment of deformation of the mirror film, for example.

Further in the present invention it is preferable that even number of the second divided electrodes are included in the variable shape mirror having the above described structure.

By this arrangement, it is easy to perform adjustment for obtaining the desired shape of the mirror when a part which includes the second divided electrodes in the driving portion is made to be a part performing fine adjustment of deformation of the mirror film, for example.

In addition, in the present invention it is preferable that the first divided electrode is formed in an elliptic shape and the second divided electrodes are disposed so as to surround the first divided electrode in the variable shape mirror having the above described structure.

By this arrangement because the first divided electrode is formed in the elliptic shape, it becomes possible for the shape of mirror to come closer to the desired shape when the mirror is disposed in slanted manner with respect to the optical axis. Further, because the second divided electrodes are disposed so as to surround the first divided electrode, it is easy to obtain the desired shape of the mirror with covering nonuniform characteristic if there is a part where characteristic is not uniform in the piezoelectric film.

In addition, in the present invention it is preferable that the second electrode film is divided into the plurality of divided electrodes, an insulating film is formed on a surface of the second electrode film which is opposite side of the piezoelectric film, and the mirror film is formed on a surface of the insulating film which is opposite side of the second electrode film in the variable shape mirror having the above described structure.

By this arrangement because the variable shape mirror has a structure in which the mirror film is formed on the insulating film that is easy to obtain a flat surface, it becomes possible to form the mirror film on flat surface. Because of this it is easy to obtain the desired shape of the mirror. Further, because the variable shape mirror is made of thin films, it becomes possible to drive the mirror with low voltage.

Further, to attain the above described second object an optical pickup device in accordance with another aspect of the present invention is characterized by that the optical pickup device is equipped with the variable shape mirror which has any one of above described structures.

According to the present invention it becomes possible for the optical pickup device to include the variable shape mirror which has flat mirror surface and which can preferably reduce an influence of the part having a nonuniform characteristic in the piezoelectric film, and as a result, it becomes possible to perform precisely the compensation of the aberration.

### BRIEF DESCRIPTION OF THE DRAWINGS

Figs. 1 is a schematic diagram to show an optical system of optical pickup device according to the present embodiment.
Fig. 2A is a schematic plan view to show a structure of the variable shape mirror which is included in the optical pickup device according to the present embodiment when the variable shape mirror is viewed from a mirror surface side.
Fig. 2B is a cross sectional view when cut along a line A - A shown in Fig. 2A.
Fig. 2C is a schematic plan view of the variable shape mirror shown in Fig. 2A when viewed from back side.
Fig. 3 is a schematic plan view to show a structure of a lower electrode film in the variable shape mirror according to the present embodiment.
Fig. 4 is a schematic plan view to show a structure of an upper electrode film in the variable shape mirror according to the present embodiment.
Fig. 5 is a diagram to show one structure of variable shape mirror in conventional technology.
Fig. 6 is a diagram to show another structure of variable shape mirror in conventional technology.

### DETAILED DESCRIPTION OF THE PREFERRED EMBODIMENTS

Hereinafter an embodiment of the present invention will be described with reference to the attached drawings. At this point, the embodiment described here is merely one example and the present invention should not be limited to the embodiment described here.

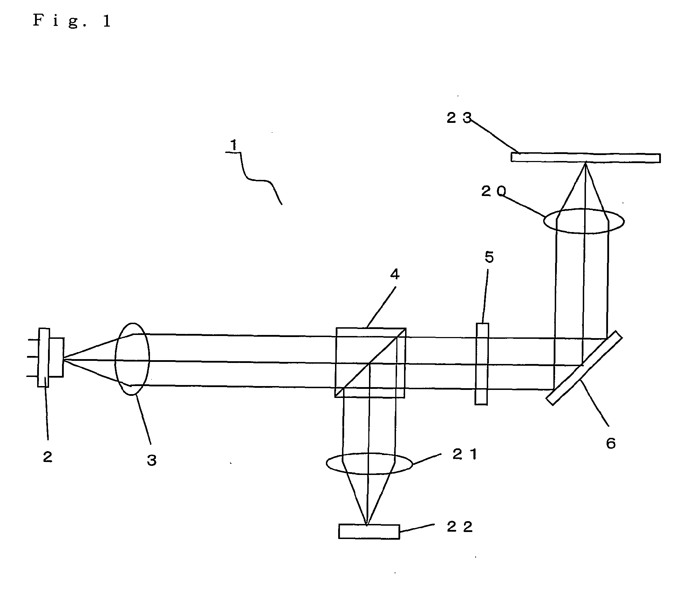

Fig. 1 is a schematic diagram to show an optical system of optical pickup device including a variable shape mirror according to the present embodiment. In Fig. 1, an optical pickup device 1 is a device which makes it possible to read information recorded on a signal recording surface of an optical recording medium 23 by irradiating a laser beam on the optical recording medium 23 such as a CD, a DVD, a Blu-ray DVD which is a high grade DVD with large capacity, or the like and by receiving reflected light, or makes it possible to record information on the recording surface by irradiating the laser beam onto the optical recording medium 23. The optical pickup device 1 is equipped with a laser light source 2, a collimator lens 3, a beam splitter 4, a quarter wave plate 5, a variable shape mirror 6, an objective lens 20, a condenser lens 21, and a light receiving portion 22, for example.

The laser light source 2 is a laser diode which emits the laser beam having a prescribed wavelength. For example, when the optical pickup device 1 is for a CD, a laser diode which can emit the laser beam having the wavelength of 785 nm is used, when the optical pickup device 1 is for a DVD, a laser diode which can emit the laser beam having the wavelength of 650 nm is used, and when the optical pickup device 1 is for a Blu-ray DVD, a laser diode which can emit the laser beam having the wavelength of 405 nm is used. At this point, the wavelength of the laser beam emitted from one laser light source 2 is only one kind in the present embodiment, however, it is no problem that a laser light source is utilized which can emit the laser beams each having a different wavelength by switching. The laser beam emitted from the laser light source 2 is sent to the collimator lens 3.

The collimator lens 3 is a lens to convert the laser beam emitted from the laser light source 2 into parallel rays. At this point the term parallel rays means a light in which all light paths of the laser beam emitted from the laser light source 2 are substantially parallel to an optical axis. The parallel rays which passed the collimator lens 3 are sent to the beam splitter 4.

The beam splitter 4 transmits the laser beam which passes the collimator lens 3 and at the same time reflects again the laser beam which is reflected by the optical recording medium 23 to lead to the light receiving portion 22. The laser beam which passes the beam splitter 4 is sent to the quarter wave plate 5.

The quarter wave plate 5 functions as a light isolator in cooperation with the beam splitter 4. The laser beam passed through the quarter wave plate 5 is sent to the variable shape mirror 6.

The variable shape mirror 6 has a mirror surface which is inclined at 45 degrees with respect to the optical axis of the laser beam emitted from the laser light source 2, for example. The laser beam passed the quarter wave plate 5 is sent to the objective lens 20 by reflection at the variable shape mirror 6. The compensation of wave aberration of the laser beam is performed by deformation of the mirror surface which is included in the variable shape mirror 6. Detail of a structure of the variable shape mirror 6 will be described later.

The objective lens 20 condenses the laser beam reflected by the variable shape mirror 6 on the information recording surface which is formed in the optical recording medium 23.

The laser beam reflected on the optical recording medium 23, passes through the objective lens 20, and is reflected by the variable shape mirror 6. The laser beam reflected by the variable shape mirror 6, passes through the quarter wave plate 5, and is reflected by the beam splitter 4, then, it is sent to the condenser lens 21. The condenser lens 21 condenses the laser beam reflected by the optical recording medium 23 on the light receiving portion 22.

The light receiving portion 22 converts light information into electric signal after the laser beam is received, and outputs it to RF amplifier (not shown) or the like, for example. This electric signal contains reproducing information of data recorded in the recording surface, necessary information for controlling the optical pickup device 1 itself and for position control of the objective lens 20 (servo information), and the like.

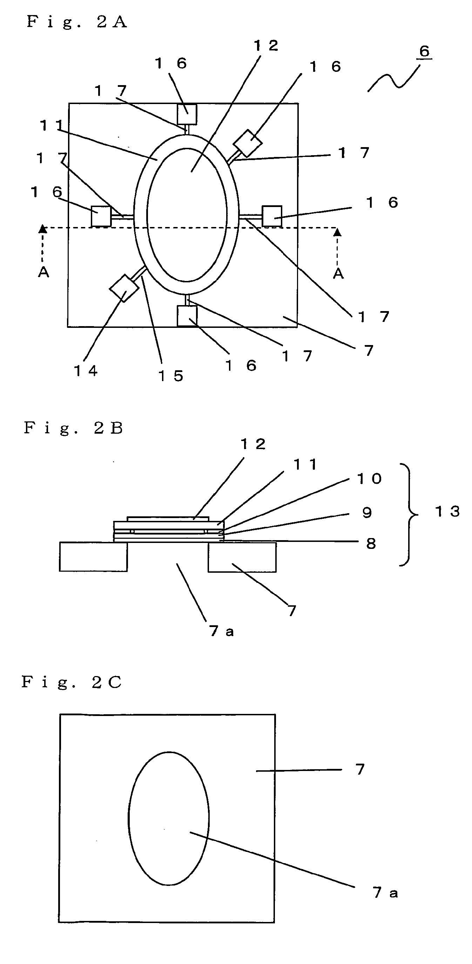

Next, detail of a structure of the variable shape mirror 6 according to the present embodiment will be explained. Fig. 2A - Fig. 2C are diagrams to show the structure of the variable shape mirror 6 which is included in the optical pickup device 1 according to the present embodiment. Fig. 2A is a schematic plan view when the variable shape mirror 6 is viewed from a mirror surface side, Fig. 2B is a cross sectional view when cut along a line A - A shown in Fig. 2A, and Fig. 2C is diagram of the variable shape mirror 6 shown in Fig. 2A when viewed from the back side.

As shown in Fig. 2A - Fig. 2C, the variable shape mirror 6 according to the present embodiment is made up of a substrate 7, a lower electrode film 8 (a first electrode film) which is disposed on the substrate 7, a piezoelectric film 9 which is disposed on the lower electrode film 8, an upper electrode film 10 (a second electrode film) which is disposed on the piezoelectric film 9, an insulating film 11 which is disposed on the upper electrode film 10, and a mirror film 12 which is disposed on the insulating film 11. The lower electrode film 8, the piezoelectric film 9, and the upper electrode film 10 compose a driving portion 13.

The substrate 7 performs a role to support the driving portion 13, the insulating film 11, and the mirror film 12. A cavity portion 7a is formed in the substrate 7 to be a structure in which it is easy to deform the mirror film 12 by driving of the driving portion 13. At this point, the cavity portion 7a is formed, for example, by an etching process or the like on a part of the substrate 7 which is made in a thick plate shape. In the present embodiment, the cavity portion 7a is processed until the lower electrode film 8 has been exposed. However, it is no problem that the cavity portion 7a is processed to make a thin layer of the substrate 7 remain without exposing the lower electrode film 8.

Further in the present embodiment the cavity portion 7a is made to have an elliptic shape, however, the present invention is not limited to this shape. The shape can be changed variously without departing from the object of the present invention. For example, it is no problem that the cavity portion 7a is made in a rectangular shape or in a circular shape. Further, as for the shape of the substrate 7, it is a rectangular in the present embodiment, however, the present invention is not limited to the shape also. It is no problem that the substrate 7 may be made in a circular shape or a polygonal shape.

As for the material of the substrate 7, insulating material such as glass, ceramic, or the like can be used, and there is no specific limitation. However, in order to get better piezoelectric characteristic of the piezoelectric film 9, it is preferable to make the substrate 7 of material such as silicon, magnesium oxide, or the like, for example. Further, when the insulating material is not used for the substrate 7, it is necessary to form an insulating layer which is made of the insulating material between the substrate 7 and the lower electrode film 8.

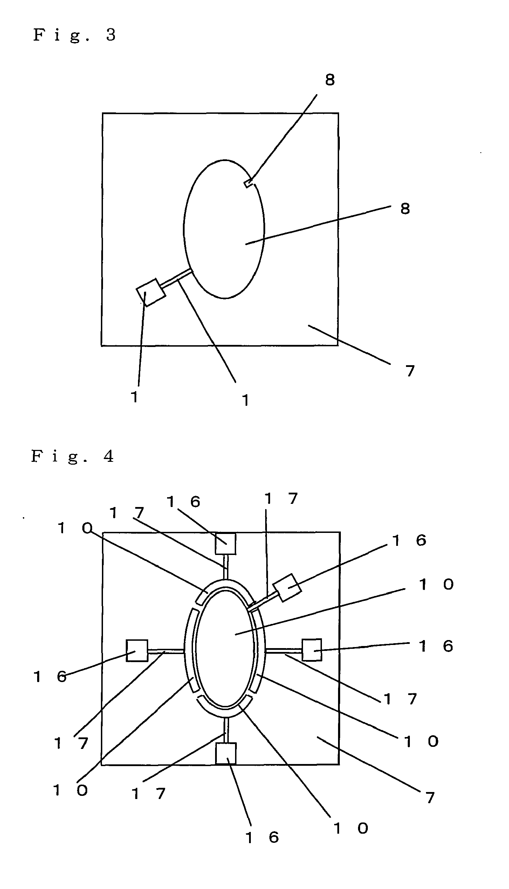

Fig. 3 is a schematic plan view to show a structure of the lower electrode film 8 in the variable shape mirror 6 according to the present embodiment. Fig. 3 shows a state that only the lower electrode film 8 is formed on the substrate 7. The lower electrode film 8 is formed in an elliptical shape without having any division. Further, the lower electrode film 8 is connected to a first electrode terminal 14 which is connected to a drive circuit (not shown) via a wiring 15.

At this point, in a part designated by reference numeral 8a in Fig. 3, the lower electrode film 8 is not disposed so that a wiring 17a for the upper electrode film 10 can be disposed. The shape of the lower electrode film 8 is not limited to the shape described in the present embodiment, and it can be changed variously without departing from the object of the present invention. For example, it is no problem that the lower electrode film 8 is made in a rectangular shape. Further, the lower electrode film 8 may have a structure in which the lower electrode film 8 is divided.

The upper electrode film 10 and the lower electrode film 8 perform a role to apply voltage to the piezoelectric film 9 which is sandwiched between the lower electrode film 8 and the upper electrode film 10. The upper electrode film 10 is divided into five divided electrodes 10a - 10e and they are disposed such that a first divided electrode 10a which has an elliptic shape is surrounded by four second divided electrodes 10b - 10e as shown in Fig. 4.

A center of the first divided electrode 10a which is formed in the elliptic shape, is structured so as to be substantially the same as a center of the mirror film 12 which is also formed in the elliptic shape, and a size of the first divided electrode 10a is made smaller than the mirror film 12. Further, opposing electrodes among the second divided electrodes 10b - 10e, that is, 10b, 10d, and 10c, 10e, are disposed in symmetric relation each other. The first divided electrode 10a and the second divided electrodes 10b - 10e are respectively connected to second electrode terminals 16a - 16e which are connected to the drive circuit (not shown) by wirings 17a - 17e.

By this division of the upper electrode film 10, it becomes possible to supply different voltages to the piezoelectric film 9 which is sandwiched between the respective divided electrodes 10a - 10e and the lower electrode film 8. Therefore, it becomes possible to control amount of variation and direction of variation of the piezoelectric film 9 which is sandwiched between the respective divided electrodes 10a - 10e and the lower electrode film 8, and also it becomes possible to deform the mirror film 12 in any desired shape.

As for the material to make the lower electrode film 8 and the upper electrode film 10, metal which has high conductive property, i.e., low resistance materials, such as Au, Cu, Al, Ti, Pt, Ir, alloy of them, and the like can be used, for example. If any step to process the material with high temperature is necessary in the production steps of the variable shape mirror 6, it is preferable to use material which has high durability for the high temperature. As for the production method for the lower electrode film 8 and the upper electrode film 10, for example, sputtering method, vapor deposition method, or the like can be utilized. However, there is no specific limitation for the thin film production and any production method can be utilized as far as the thin film is formed. At this point, it is no problem that the lower electrode film 8 and the upper electrode film 10 are made of the same material or of different materials.

The piezoelectric film 9 is formed in the same shape as the lower electrode film 8 on the lower electrode film 8. When voltage is applied between the lower electrode film 8 and the upper electrode film 10, the piezoelectric film 9 is expanded or contracted in response to polarity of the voltage, as a result, the piezoelectric film 9 deforms the mirror film 12. At this point, as will be described later, in the present embodiment, a part which is composed of the lower electrode film 8, the first divided electrode 10a, and the piezoelectric film 9 that is sandwiched between the lower electrode film 8 and the first divided electrode 10a among the driving portion 13, corresponds to a part which performs main deformation of the mirror film 12. Further, a part which is composed of the lower electrode film 8, the second divided electrodes 10b - 10e, and the piezoelectric film 9 that is sandwiched between the lower electrode film 8 and the second divided electrodes 10b - 10e among the driving portion 13, corresponds to a part which performs fine adjustment of deformation of the mirror film 12.

As for the material to make the piezoelectric film 9, lead zirconate titanate (Pb(ZrₓTi₁₋ₓ)O₃) is used, for example. However, it is no problem that piezoelectric ceramics other than PZT is used. In addition, it is also no problem that piezoelectric polymer such as polyvinylidene-fluoride is used. However, piezoelectric body which has high piezoelectric constant and has large displacement when voltage is applied, is more preferable.

As for the production method for the piezoelectric film 9, for example, sputtering method, vapor deposition method, chemical vapor deposition method (CVD method), Sol-Gel method, Aerosol deposition method (AD method) or the like can be utilized. However, there is no specific limitation for the thin film production and any production method can be utilized as far as the thin film is formed.

The insulating film 11 is formed so as to cover the upper electrode film 10 on the upper electrode film 10. Because of existence of the insulating film 11, size of the mirror film 12 can be designed without being influenced by shape of the upper electrode film 10 even if the mirror film 12 is formed of the conductive material. Further, because the mirror film 12 is formed on the insulating film 11, it becomes possible to form the mirror film 12 smoothly even if the upper electrode film 10 is divided as in the present embodiment.

As for the material to make the insulating film 11, resin such as polyimide, epoxy, or the like is used, for example. As for the production method for the insulating film 11, a method is utilized that liquid epoxy resin is coated, then it is fired or the like, for example.

The mirror film 12 performs a role to reflect a laser beam emitted from the laser light source 2 (See, Fig. 1), or a laser beam reflected by the optical recording medium 23 (See, Fig. 1). Further, the mirror film 12 is deformed in a desired shape by expansion or contraction of the piezoelectric film 9, and the mirror film 12 performs a role to compensate the aberration such as the coma aberration, the spherical aberration, or the like which is generated in the optical pickup device 1 (See, Fig. 1). At this point in the present embodiment the mirror film 12 is formed in the elliptic shape, however, the present invention is not limited in the shape. It is no problem that the mirror film 12 is formed in a rectangular shape, a circular shape, or the like.

As for the material to make the mirror film 12, material having high degree of reflection is preferable, and metal film of Au, Al, Ti, Cr, and the like, or alloy film of them can be used. Further, it is no problem that the mirror film 12 is formed by piling up a plurality of films. As for the production method for the mirror film 12, for example, sputtering method, vapor deposition method, or the like can be utilized. However, there is no specific limitation for the thin film production and any production method can be utilized as far as the thin film can be formed.

Hereinafter, one example of the production method for the variable shape mirror 6 in the present embodiment which is composed as above described will be explained. First, thin films of the lower electrode film 8, the piezoelectric film 9, and upper electrode film 10 are formed in this order on one side of the substrate 7 in a flat plate shape by the sputtering method or the like as above described (first step - third step). Next, the insulating film 11 is formed by coating liquid resin on the upper electrode film 10, then by firing it (fourth step).

Next, the substrate 7 is processed from the side where the lower electrode film 8 to the insulating film 11 are not formed, until the lower electrode film 8 is exposed by means of dry etching method (fifth step). Then, the mirror film 12 is formed on the insulating film 11 by means of the sputtering method or the like (sixth step). Further, the wirings for the lower electrode film 8 and the upper electrode film 10 are patterned on the substrate 7 (seventh step). At this point it is needless to say that the production method for the variable shape mirror 6 is not limited to the method as above described and it is no problem that other method is employed to form the variable shape mirror 6.

Next an explanation will be given about adjustment of voltage which is applied to the piezoelectric film 9 in order to deform shape of the mirror film 12 into a desired shape if there is a part where the characteristic of the piezoelectric film 9 is not uniform in the variable shape mirror 6 in the present embodiment utilizing one example. At this point, an explanation is done by the example using a case where compensation of the spherical aberration is performed utilizing the optical pickup device 1 which includes the variable shape mirror 6 according to the present embodiment.

The laser beam emitted from the laser light source 2 enters obliquely into the variable shape mirror 6 which is included in the optical pickup device 1 according to the present embodiment as shown in Fig. 1. In such a case compensation of the spherical aberration can not be performed by deforming simply in spherical manner the mirror film 12 in order to perform compensation of the spherical aberration utilizing the variable shape mirror 6. By this reason it is preferable that a shape of the electrode to deform the piezoelectric film 9 is made in an elliptic shape.

In this point, the first divided electrode 10a which is a divided electrode of the upper electrode film 10 in the present embodiment is formed in the elliptic shape and when voltage is applied between the first divided electrode 10a and the lower electrode film 8, the mirror film 12 is usually deformed in the desired shape. However, if a part where its characteristic is not uniform exists in the piezoelectric film 9, there is a possibility that the mirror film 12 does not become the desired shape. Because it is often the case that the part where its characteristic is not uniform in the piezoelectric film 9 is generated only as a microscopic region, it becomes possible that defect in the shape of deformed mirror which is caused by nonuniform characteristics in the piezoelectric film 9 is compensated by applying small force around the first divided electrode.

For this purpose the present embodiment has a structure to adjust deformation of a portion at which the desired deformation is not obtained in the mirror film 12 by means that four second divided electrodes 10b - 10e are disposed around the first divided electrode 10a and the voltage is applied to any one of them or to a plurality of them. At this point, the present embodiment employs four second divided electrodes, however, the number of them is not limited to four. But it is preferable that the number is even because it is easy to perform fine adjustment of the deformation of the mirror uniformly.

Further in the present embodiment, a structure is described in which fine adjustment for the deformation of the mirror film 12 is performed utilizing the second divided electrodes 10b - 10e in a case there is the part where its characteristic is not uniform in the piezoelectric film 9 which is sandwiched between the first divided electrode 10a and the lower electrode film 8. However, the present invention is not limited to the present embodiment. That is to say a structure or the like is no problem in which fine adjustment for the deformation of the mirror film 12 is performed utilizing the first divided electrode 10a in a case there is the part where its characteristic is not uniform in the piezoelectric film 9 which is sandwiched between any one or a plurality of the second divided electrodes 10b - 10e and the lower electrode film 8, for example, when the compensation of wave aberration is performed utilizing the variable shape mirror 6.

In addition, the structure of the upper electrode film 10 and the lower electrode film 8 is not limited to the structure as above described in the present embodiment, and various modification can be introduced without departing from the object of the present invention. That is, a structure or the like is no problem in that the first divided electrode 10a is formed in a circular shape, in a rectangular shape, or the like and a structure or the like is no problem in that the second divided electrodes are formed by only 10b and 10d shown in Fig. 4. Further, a structure or the like is no problem in that the lower electrode film 8 and the upper electrode film 10 are disposed oppositely from the structure of the present embodiment.

Further in the present embodiment, a structure is described in that the variable shape mirror 6 according to the present invention is included in the optical pickup device 1, however, it is also no problem that the variable shape mirror 6 of the present invention is applied to other optical devices (optical devices included in such as a digital camera, a projector, or the like, for example).

The present invention is characterized by that a variable shape mirror is composed of: a driving portion which includes a piezoelectric film and a first electrode film and second electrode film which sandwich the piezoelectric film; a substrate for supporting the driving portion in contact with the first electrode film; and a mirror film which is deformed by driving of the driving portion, and the variable shape mirror is characterized by a structure in that at least one of the first electrode film and the second electrode film is divided into a plurality of divided electrodes, and the driving portion includes a part which performs main deformation of the mirror film and a part which performs fine adjustment of deformation of the mirror film.

Because of this arrangement it becomes possible that the desired shape of the mirror is obtained by adjustment of voltage which is applied to each of the divided electrodes if there is the part where its piezoelectric characteristic is not uniform in the piezoelectric film which is sandwiched between the first electrode film and the second electrode film.

A structure can be realized by which it is easy to deform the mirror in the desired shape by means that the second electrode film is divided into a plurality of divided electrodes, the insulating film is formed on a surface of the second electrode film which is opposite side of the piezoelectric film, and the mirror film is formed on a surface of the insulating film which is opposite side of the second electrode film in the variable shape mirror described above.

In the optical pickup device which includes the variable shape mirror according to the present invention as the aberration compensating mirror, it becomes possible to perform precisely the compensation of the aberration because it is easy to deform the mirror surface of the aberration compensating mirror in the desired shape.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A variable shape mirror comprising:
a driving portion which includes a piezoelectric film and a first electrode film and a second electrode film which sandwich the piezoelectric film;
a substrate for supporting the driving portion in contact with the first electrode film; and
a mirror film which is deformed by driving of the driving portion,
**characterized in that**
at least one of the first electrode film and the second electrode film is divided into a plurality of divided electrodes, and
the driving portion includes a part which performs main deformation of the mirror film and a part which performs fine adjustment of deformation of the mirror film.

2. The variable shape mirror according to claim 1, **characterized in that** the divided electrodes are composed of a first divided electrode and at least one second divided electrodes which are disposed around the first divided electrode.

3. The variable shape mirror according to claim 2, **characterized in that** even number of the second divided electrodes are included.

4. The variable shape mirror according to claim 2 or claim 3, **characterized in that** the first divided electrode is formed in an elliptic shape and the second divided electrodes are disposed so as to surround the first divided electrode.

5. The variable shape mirror according to any one of claim 1 to claim 4, **characterized in that**
the second electrode film is divided into the plurality of divided electrodes,
an insulating film is formed on a surface of the second electrode film which is opposite side of the piezoelectric film, and
the mirror film is formed on a surface of the insulating film which is opposite side of the second electrode film.

6. An optical pickup device which is equipped with the variable shape mirror according to any one of claim 1 to claim 5.
